# EUROPÄISCHE PATENTSCHRIFT

(11) **EP 2 910 674 B1**
(45) Veröffentlichungstag und Bekanntmachung des Hinweises auf die Patenterteilung: **12.04.2017**
(21) Anmeldenummer: 15156509.0
(22) Anmeldetag: 25.02.2015
(51) Int. Cl.: D06F 57/12, A47J 47/20, E03C 1/04

(54) **TROCKENVORRICHTUNG FÜR SPÜLTÜCHER UND SCHWÄMME**
DRYING DEVICE FOR DISH CLOTHS AND SPONGES
DISPOSITIF DE SÉCHAGE POUR LAVETTES ET ÉPONGES

(30) Priorität: 25.02.2014 DE 202014001844 U
(43) Veröffentlichungstag der Anmeldung: 26.08.2015
(73) Patentinhaber: Wagner, Horst, 81243 München (DE)
(72) Erfinder: Wagner, Horst, 81243 München (DE)
(74) Vertreter: Jöstingmeier, Martin

(56) Entgegenhaltungen:
- CH-A- 386 070
- DE-A1-102011 050 293
- DE-U1- 20 107 741
- FR-A- 1 082 185
- US-A- 1 461 124
- US-A- 1 783 666
- US-A- 2 997 182

## Beschreibung

### Technisches Gebiet

Die Erfindung betrifft eine Trockenvorrichtung für Spültücher und Schwämme.

### Stand der Technik

In der Küche werden in der Regel Spültücher und Schwämme verwendet, um Arbeitsplatten, Geschirr, Besteck, Arbeitsgerät und dgl. zu reinigen. Dazu werden die Spültücher bzw. Schwämme in der Regel angefeuchtet. Nach dem Reinigen müssen die Spültücher bzw. Schwämme wieder trocknen, damit sich keine Mikroben in dem feuchten Milieu vermehren und beim nächsten Gebrauch auf die zur Zubereitung oder zum Servieren von Speisen genutzten Küchenutensilien übertragen, so dass Gefahr besteht, dass diese Mikroben mit den Speisen in den Körper eingebracht werden. Letzteres kann die Gesundheit beeinträchtigen. In der Praxis werden die Spültücher gerne über den Schwenkauslauf gehängt, was aber eine Infektion des immer feuchten Wasserauslasses mit sich bringt. Deshalb besteht bei dieser Art der Trocknung die Gefahr einer Trinkwasserverunreinigung.

1961 wurde in der CH 386 070 vorgeschlagen an Wasserabgabestellen in Badezimmern und Toiletten mittels einer elastischen Spange einen horizontalen Trockenstab für Waschlappen und dgl. zu befestigen.

CH 368 070 offenbart eine Trockenvorrichtung aus zwei Stäben, die seitlich mit einer Schelle an einem Wasserhahn befestigt wird.

DE20107741 offenbart eine Bügelkonstruktion mit einem U-förmigen, doppelschenkligen Halter für ein Spültuch. Der Spülgerätehalter hat zwei zueinander parallele Abschnitte, die an ihrem von der Befestigung wegweisenden Ende über einen Bogen miteinander verbunden sind.

US2997182 offenbart eine unbewegliche, höhen- und längenverstellbare Trockeneinrichtung zur Kleidertrocknung in der Dusche.

US1461124 beschreibt ein "Towel Rack" als eine an einem Wasserboiler anzubringende Konstruktion. Die Konstruktion hat einzelne hölzerne Trockenstäbe, die auf einer Metallplatte angeordnet sind. Ein breitenverstellbarer Metallring dient zur Befestigung am Boilerauslauf.

FR1082185 offenbart eine stabförmige Ablage die als "Moyens de support d'articles de toilette ou de menage" bezeichnet wird. Die Ablage hat eine auf jedes Wasserhahnrohr anpassbare Haken-Schraubgewinde-Mutter-Konstruktion zur Ablage von Tüchern, Seifen usw. Alternativ kann das "Moyens de supprt d'articles de toilette ou de menage" anstelle von Haken mit einem Saugnapf an einem Ort der Wahl befestigt werden.

US1783666 beschreibt eine steckbare Halteklammer ("Supporting Bracket") zur Befestigung einer Haltestange an einem über Putz verlegten Wasserrohr beschrieben. An der Haltestange sollen Wasserkübel oder ähnliche Gebrauchsgegenstände befestigt werden können.

### Darstellung der Erfindung

Die Erfindung beruht auf der Erkenntnis, dass der Trockenstab nach der CH 386 070 für die Anwendung in der Küche nicht geeignet ist, weil er den Arbeitsraum im Bereich der Spüle stark einschränkt und zudem die Gefahr besteht, dass man beim Spülen schmerzhaft mit dem Ende des Trockenstabes kollidiert. Der Erfindung liegt die Aufgabe zugrunde eine Trockenvorrichtung für Spültücher und Schwämme nach Gebrauch in der Küche bereitzustellen.
Diese Aufgabe wird durch eine Vorrichtung nach Anspruch 1 gelöst. Vorteilhafte Ausgestaltungen der Erfindung sind in den Unteransprüchen angegeben.
Nachfolgend wird zwischen Spültüchern, Tuchschwämmen, Spülschwämmen und dgl. nicht weiter unterschieden. Diese werden vereinfachend unter dem Begriff Spültuch zusammengefasst.
Nach der Erfindung wird eine Spültuch- und Schwamm-Trockenvorrichtung (nachfolgend kurz "Trockeneinrichtung") vorzugsweise an einem Schwenkauslauf einer Küchenarmatur befestigt, d.h. oberhalb des Gelenks zum Schwenken der Küchenarmatur.
Die Trockeneinrichtung hat wenigstens einen Trockenstab zur Aufnahme eines Spültuchs. Über den Trockenstab kann das Spültuch gehängt werden, so dass es gut trocknet.

Die Trockeneinrichtung hat vorzugsweise eine Aufnahme zur Befestigung oberhalb des Gelenks der Küchenarmatur. An der Aufnahme ist der Trockenstab befestigt. Die Aufnahme kann z.B. eine Schelle und/oder eine Lagerbuchse oder dgl. sein oder aufweisen. Alternativ kann die Aufnahme auch integraler Bestandteil der Küchenarmatur sein, die z.B. durch eine den Trockenstab halternde bzw. drehbar lagernde Ausnehmung des Schwenkauslaufs gebildet wird.

Vorzugsweise ist der Trockenstab zumindest in einer vertikalen Ebene schwenkbar an der Aufnahme befestigt. Die schwenkbare Befestigung des Trockenstabes ermöglicht es, die Trockeneinrichtung an eine Vielzahl unterschiedlicher Typen von Küchenarmaturen zu montieren und die Ausrichtung des Trockenstabes einfach an die jeweilige Küchenarmatur anzupassen. Beispielsweise kann die Aufnahme ein Schwenkgelenk haben, an dessen freiem Ende ein erstes Ende oder ein erster Endabschnitt des Trockenstabes befestigt ist. Das Schwenkgelenk ist vorzugsweise selbsthemmend, um eine schwerkraftbedingte Verstellung der Ausrichtung des Trockenstabes zu verhindern, aber dennoch eine einfache Einstellung der Ausrichtung zu ermöglichen. Beispielsweise kann eine Seite des Schwenkgelenks wenigstens eine Rastnase aufweisen, die mit komplementären Vertiefungen der anderen Seite des Schwenkgelenks zusammenwirkt, so dass bei einer Einstellung der Ausrichtung des Trockenstabes die wenigstens eine Rastnase von einer Ausnehmung in die nächste überrastet. Ansonsten hält die Rastnase den Trockenstab in der einmal eingestellten Position. Der Trockenstab hat einen ersten Abschnitt mit einem ersten Ende, das in einer dazu komplementären Ausnehmung der Aufnahme um die Längsachse des ersten Abschnitts drehbar gelagert sitzt und dadurch mit der Aufnahme ein Gelenk ausbildet. Die Längsachse des ersten Abschnitts erstreckt sich zumindest in etwa horizontal (±10°, vorzugsweise ±5° oder besser) und vorzugsweise zumindest in etwa orthogonal (±10°, vorzugsweise ±5° oder besser) zu der durch den Schwenkauslauf definierten meist vertikalen Ebene.
Wie schon zuvor beschrieben, ist die Lagerung vorzugsweise selbsthemmend und/oder manuell festsetzbar, z.B. durch Anziehen einer Spannschraube.
Nur um Missverständnisse zu vermeiden: Der Schwenkauslauf ragt üblicherweise in einer Richtung von der Schwenkachse weg. Meist ist in dieser Richtung ein Auslaufarm an einen Schwenkfuß angesetzt. Diese Richtung zusammen mit der meist vertikalen Schwenkachse definieren "die durch den Schwenkauslauf definierte Ebene". Bei einer Drehung des Schwenkauslaufs wird folglich auch die durch ihn definierte Ebene mitgedreht.

An den ersten Abschnitt des Trockenstabes schließt sich ein zweiter Abschnitt an, der gegenüber dem ersten Abschnitt abgewinkelt ist, so dass der zweite Abschnitt bei einer Drehung des ersten Abschnittes in einer vertikalen Ebene geschwenkt wird. Daher bewirkt die Drehlagerung des ersten Abschnitts eine Schwenklagerung der übrigen Abschnitte und in diesem Sinne des Trockenstabes. Die Drehlagerung des ersten Abschnitts kann daher auch als Schwenklager des Trockenstabes bezeichnet werden.

An den zweiten Abschnitt schließt sich ein dazu abgewinkelter dritter Abschnitt an. Der zweite und/oder der dritte Abschnitt sind vorzugsweise zumindest in etwa gerade, können aber auch leicht gebogen sein. Der zweite und/oder der dritte Abschnitt sind vorzugsweise zumindest in etwa horizontal (±10°, vorzugsweise ±5° oder besser) ausgerichtet und haben eine Auflagefläche zum Aufhängen eines Spültuches. Der Abschnitt mit der Auflagefläche für das Spültuch wird nachfolgend auch als "Hängeabschnitt" bezeichnet. Vorzugsweise ist die Auflagefläche für das Spültuch rutschhemmend. Dazu kann der entsprechende Abschnitt z.B. eine rutschhemmende Beschichtung aufweisen und/oder eine angeraute Oberfläche haben.
Der Hängeabschnitt sollte vorzugsweise zumindest in etwa gerade sein und sich zumindest in etwa parallel (±10°, vorzugsweise ±5° oder besser) zum Schwenkarm der Küchenarmatur erstrecken. Parallel zum Schwenkarm meint bei gekrümmten Schwenkarmen parallel zu der vertikalen Ebene, die der Schwenkarm definiert.
Vorzugsweise überragt der Trockenstab die Küchenarmatur nicht nach vorne, um eine Verletzungsgefahr zu reduzieren. Besonders bevorzugt überragt die Küchenarmatur den Trockenstab z.B. um 0,5 cm bis 5 cm. Bevorzugt ist die Länge des Trockenstabes einstellbar. Insbesondere der Hängeabschnitt kann Sollbruchstellen (wenigstens eine) aufweisen, um den Trockenstab einfach auf die gewünschte Länge einzustellen. Alternativ oder zusätzlich kann die Länge des Trockenstabes teleskopisch verstellbar sein, z.B. durch eine Hülse, die auf einem Abschnitt mit einem freien Ende verschiebbare angeordnet ist, wobei die Hülse vorzugsweise eine Auflagefläche für das Spültuch hat.
Wenn das zweite Ende des Trockenstabes ein freies Ende ist, ist dieses vorzugsweise abgerundet. Alternativ oder zusätzlich kann auch ein vorzugsweise elastisches und/oder vorzugsweise abgerundetes Endstück, z.B. eine Kugel oder ein anderes rundes Objekt auf das freie Ende aufgesetzt sein. Alternativ kann das freie Ende umgebogen sein, so dass es parallel nach hinten weist. Auch diese Ausführungsformen reduzieren die Verletzungsgefahr.

Wenn der Trockenstab nach hinten umgebogen ist, ist zwischen dem Bogen und dem zweiten Ende vorzugsweise ein weiterer Hängeabschnitt, dessen Länge zumindest in etwa (±25%, vorzugsweise ±15%) dem dazu zumindest in etwa parallelen (±30°, vorzugsweise ±15° oder besser) Hängeabschnitt entspricht. Dadurch wird der Platz zum Hängen von Spültüchern entsprechend vergrößert. Die Oberfläche des weiteren Hängeabschnitts ist ebenso vorzugsweise rutschhemmend.

Der zweite Hängeabschnitt verläuft vorzugsweise zwischen dem Hängeabschnitt und der Küchenarmatur, um die Verletzungsgefahr durch das zweite Ende möglichst zu reduzieren. Diese weist dann bevorzugt von dem Nutzer der Küchenarmatur weg oder ist ebenfalls daran, z.B. mittels der Aufnahme daran befestigt. Ebenso kann sich der weitere Abschnitt auf der anderen Seite der Küchenarmatur erstrecken, wobei der Bogen dann entweder unter oder über die Küchenarmatur geführt ist. An den weiteren Abschnitt können sich weitere Abschnitte anschließen, so dass das zweite Ende bzw. der zweite Endabschnitt ebenfalls an der Aufnahme, vorzugsweise ggf. ebenfalls schwenkbar befestigt ist. Diese Befestigung erfolgt vorzugsweise wie die des ersten Endes.

Der wenigstens eine Hängeabschnitt des Trockenstabes erstreckt sich vorzugsweise in einer vertikalen Ebene, die zumindest in etwa parallel (±15°, vorzugsweise ±7,5° oder besser) zu der vertikalen Ebene ist, die durch den Schwenkauslauf definiert wird.

Die Aufnahme kann vorzugsweise in die Küchenarmatur integriert sein, dadurch lässt sich eine leicht sauber zu haltende glatte Oberfläche realisieren.

### Beschreibung der Zeichnungen

Die Erfindung wird nachstehend ohne Beschränkung des allgemeinen Erfindungsgedankens anhand von Ausführungsbeispielen unter Bezugnahme auf die Zeichnungen exemplarisch beschrieben.
- Figur 1: zeigt eine erste Küchenarmatur mit einer Ausführung einer Spültuch- oder Schwamm-Trockeneinrichtung.
- Figur 2: zeigt eine zweite Küchenarmatur mit einer zweiten Ausführung einer Spültuch- oder Schwamm-Trockeneinrichtung.
- Figur 3: zeigt eine weitere Ausführung einer Spültuch- oder Schwamm-Trockeneinrichtung

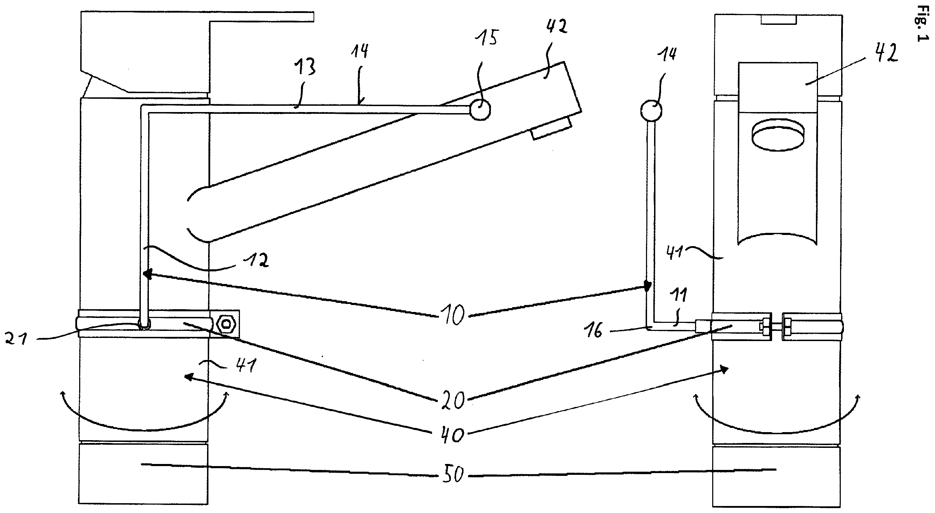

Figur 1 zeigt in einer Seitenansicht (links) und einer Frontansicht (rechts) eine Küchenarmatur mit einem Sockel 50, der üblicherweise in unmittelbarer Nähe eines Spülbeckens entweder auf der Arbeitsfläche oder an dem Rand des Spülbeckens starr montiert wird. Auf dem Sockel 50 sitzt ein schwenkbarer Auslauf, kurz Schwenkauslauf 40 mit einem Fußstück 41, an das ein Auslaufarm 42 angesetzt ist. Die Schwenkbewegung ist durch Pfeile angedeutet.

An dem Schwenkauslauf 40 ist eine Aufnahme 20 zur Befestigung eines Trockenstabes 10 befestigt. Dazu wird der Schwenkauslauf 40 von einer Schelle 22 umgriffen. Seitlich an der Schelle 22 ist eine Lagerbuchse 21, in der ein erster Abschnitt 11 eines Trockenstabes 10 vorzugsweise drehbar gelagert ist. Alternativ kann die Lagerbuchse 21 den Trockenstab 10 auch starr mit der Aufnahme verbinden. Im Fall einer Drehlagerung ist die Lagerung vorzugsweise selbsthemmend. Alternativ kann die Lagerung auch manuell festgesetzt werden, z.B. durch eine Spannschraube oder dgl. (nicht dargestellt).

Der erste Abschnitt 11 ist über einen ersten Bogen 16 mit einem zweiten Abschnitt 12 verbunden. Der zweite Abschnitt 12 ist hier nur beispielhaft vertikal dargestellt, um der Form des Fußstücks 41 zu folgen. An den zweiten Abschnitt 12 schließt sich über einen zweiten Bogen 17 ein dritter Abschnitt 13 an, der hier beispielhaft horizontal dargestellt ist. Der dritte Abschnitt 13 hat eine Auflagefläche 14 für ein Spültuch. Daher wird der dritte Abschnitt 13 auch als Hängeabschnitt 13 bezeichnet. Die Auflagefläche 14 ist vorzugsweise etwas angeraut oder rutschhemmend beschichtet, so dass das Spültuch nicht ohne weiteres von dem Hängeabschnitt 13 rutscht. Durch die Drehlagerung des ersten Abschnitts 11 können der zweite und der dritte Abschnitt 12, 13 in einer vertikalen Ebene geschwenkt werden, so dass die Aufnahme 20 zusammen mit der Trockenstab 10 ein Schwenklager ausbildet.

Anders als dargestellt, könnte die Lagerbuchse 21 auch unmittelbar an den Schwenkauslauf 40 angeformt sein oder von diesem ausgebildet werden. Dann wäre die Aufnahme 20 in den Schwenkauslauf 40 integriert.

Das zweite hier beispielhaft freie Ende des Trockenstabes 10 mündet in einem vorzugsweise elastischen und vorzugsweise abgerundeten Endstück 15, das beispielhaft als Kugel dargestellt ist.

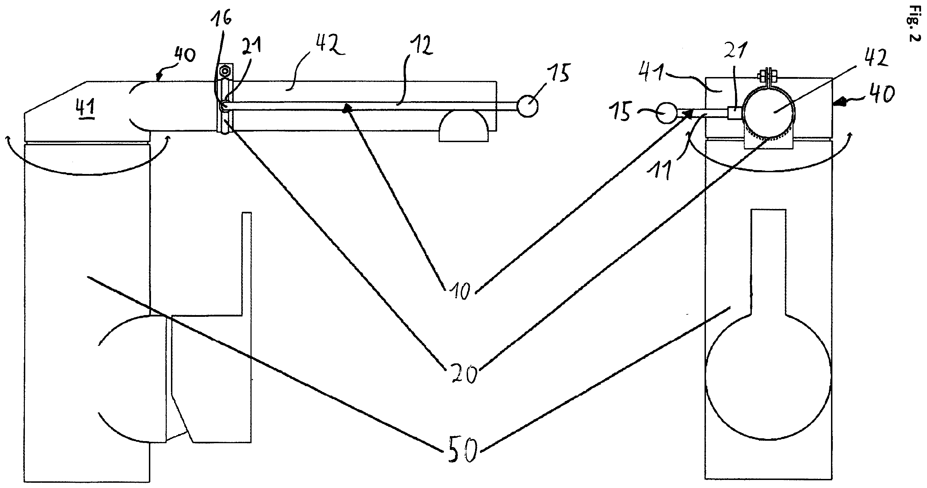

Figur 2 zeigt ebenfalls in einer Seitenansicht (links) und einer Frontansicht (rechts) eine Küchenarmatur mit einem Sockel 50, der üblicherweise in unmittelbarer Nähe eines Spülbeckens entweder auf der Arbeitsfläche oder an dem Rand des Spülbeckens montiert wird. Auf dem Sockel sitzt ein schwenkbarer Auslauf, kurz Schwenkauslauf 40 mit einem Fußstück 41, von dem ein Auslaufarm 42 abzweigt. Die Schwenkbewegung ist wiederum durch Pfeile angedeutet.

An dem Schwenkauslauf 40 ist eine Aufnahme 20 für einen Trockenstab 10. Die Aufnahme 20 besteht aus einer Schelle 22 mit einer seitlich daran angesetzten Lagerbuchse 21. Wenn die Lagerbuchse 21 unmittelbar am Schwenkauslauf angeordnet ist, dann kann die Schelle 22 entfallen. Ebenso kann anstelle der Lagerbuchse 21 eine Ausnehmung in dem Schwenkarm 42 als Aufnahme für den Trockenstab 10 vorgesehen sein (gilt entsprechend auch für die Ausführungsform nach Fig. 1).

Der Trockenstab 10 sitzt mit einem ersten Abschnitt 11 vorzugsweise drehbar (besonders bevorzugt selbsthemmend) in der Lagerbuchse 21. An den ersten Abschnitt 11 schließt sich über einen ersten Bogen 16 ein zweiter Abschnitt 12 mit einer Auflagefläche 14 für das Spültuch an. Die Ausführungsform nach Fig. 2 unterscheidet sich im Wesentlichen dadurch von der Ausführungsform nach Fig. 1, dass die Aufnahme 20 im Bereich des Auslaufarms 42 angeordnet ist und nicht im Bereich des Fußstücks 41. Im Übrigen kann die Beschreibung zur Fig. 1 auch auf die Fig. 2 gelesen werden (und vice versa).

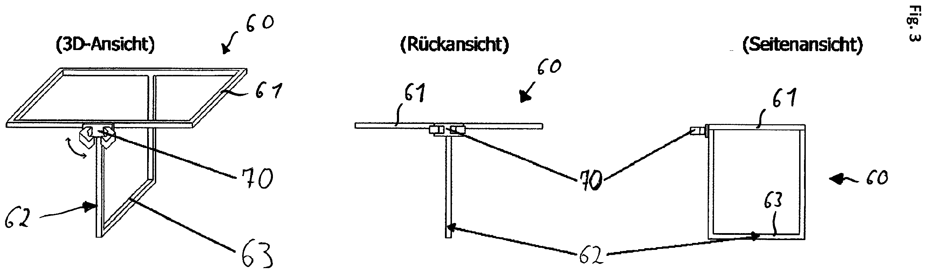

Figur 3 zeigt einen Korb 60 mit einem umlaufenden Rand 61 und einer daran befestigten U-förmigen Strebe 62. Die ,freien' Enden der U-förmigen Strebe 62 sind an dem Rand befestigt, so dass der Mittelschenkel 63 der U-förmigen Strebe 32 die Auflagefläche des Korbs 60 bildet. Weitere Streben 62 können in gleicher Weise z.B. parallel zu der dargestellten Streb 62 angeordnet werden. An dem Korb 60 ist ein Clip 70 vorzugsweise drehbar befestigt, so dass der Korb sehr einfach mittels des Clips auf die Trockenstange 10 aufgesteckt werden kann, um z.B. einen Spülschwamm oberhalb des Spülbeckens anzuordnen, so dass er in dieses abtropft.

### Bezugszeichenliste

- 10: Trockenstab
- 11: erster Abschnitt
- 12: zweiter Abschnitt / auch Hängeabschnitt (Fig. 2)
- 13: dritter Abschnitt / auch Hängeabschnitt (Fig. 1)
- 14: Auflagefläche
- 15: Endstück, z.B. Kugel
- 16: erster Bogen
- 17: zweiter Bogen
- 20: Aufnahme
- 21: Lagerbuchse
- 22: Schelle
- 40: Schwenkauslauf
- 41: Fußstück
- 42: Auslaufarm
- 50: Sockel
- 60: Korb
- 61: Rahmen
- 62: Strebe
- 63: Mittelschenkel
- 70: Clip

## Patentansprüche

1. Spültuch- oder Schwamm-Trockeneinrichtung mit wenigstens einem Trockenstab (10) zum Aufhängen eines Spültuchs und mit einer Aufnahme (20) zur Befestigung des Trockenstabes an einem Schwenkauslauf (40) einer Küchenarmatur
**dadurch gekennzeichnet, dass**
- der Trockenstab (10) mit einem ersten Abschnitt (11) oder mit einem erstem Ende, in einer dazu komplementären Ausnehmung der Aufnahme (20) um die Längsachse des ersten Abschnitts (11) drehbar gelagert sitzt und dadurch ein Schwenkgelenk ausbildet,
- die Längsachse des ersten Abschnitts (11) sich zumindest in etwa horizontal erstreckt,
- sich an den ersten Abschnitt (11) ein zweiter Abschnitt (12) anschließt, der gegenüber dem ersten Abschnitt (11) abgewinkelt ist, so dass der zweite Abschnitt (12) bei einer Drehung des ersten Abschnittes (11) in einer vertikalen Ebene geschwenkt wird, und
- sich an den zweiten Abschnitt ein dazu abgewinkelter dritter Abschnitt anschließt.

2. Spültuch- oder Schwamm-Trockeneinrichtung nach Anspruch 1
**dadurch gekennzeichnet, dass**
der Trockenstab (10) zumindest in einer vertikalen Ebene schwenkbar an der Aufnahme (20) befestigt ist.

3. Spültuch- oder Schwamm-Trockeneinrichtung nach Anspruch 2, **dadurch gekennzeichnet, dass**
die Aufnahme (20) wenigstens ein Schwenkgelenk hat, an dessen freiem Ende ein erstes Ende oder ein erster Abschnitt (11) des Trockenstabes (10) befestigt ist.

4. Spültuch- oder schwamm-Trockeneinrichtung nach Anspruch 2 oder 3, **dadurch gekennzeichnet, dass**
das Schwenkgelenk bzw. die schwenkbare Befestigung selbsthemmend ist.

5. Spültuch- oder Schwamm-Trockeneinrichtung nach Anspruch 4, **dadurch gekennzeichnet, dass**
eine Seite des Schwenkgelenks wenigstens eine Rastnase aufweist, die mit komplementären Vertiefungen der anderen Seite des Schwenkgelenks zusammenwirkt, so dass bei einer Einstellung der Ausrichtung des Trockenstabes (10) die wenigstens eine Rastnase von einer Ausnehmung in die nächste überrastet.

6. Spültuch- oder Schwamm-Trockeneinrichtung nach einem der Ansprüche 1 bis 5, **dadurch gekennzeichnet, dass**
die Längsachse des ersten Abschnitts (11) sich zumindest in etwa orthogonal zu der durch den Schwenkauslauf (40) definierten vertikalen Ebene erstreckt.

7. Spültuch- oder Schwamm-Trockeneinrichtung nach einem der Ansprüche 1 bis 6, **dadurch gekennzeichnet, dass**
der zweite und/oder der dritte Abschnitt (12, 13) vorzugsweise zumindest in etwa horizontal ausgerichtet sind/ist und wenigstens der zweite und/oder der dritte Abschnitt (12, 13) ein erster Hängeabschnitt (12, 13) mit einer Auflagefläche (14) zum Aufhängen eines Spültuches ist.

8. Spültuch- oder Schwamm-Trockeneinrichtung nach Anspruch 7, **dadurch gekennzeichnet, dass**
der erste Hängeabschnitt (12, 13) über einen Bogen mit einem zweiten Hängeabschnitt verbunden ist und sich der zweite Hängeabschnitt zumindest in etwa parallel zu dem ersten Hängeabschnitt (12, 13) erstreckt.

9. Spültuch- oder Schwamm-Trockeneinrichtung nach Anspruch 7, **dadurch gekennzeichnet, dass**
sich der zweite Hängeabschnitt zwischen dem ersten Hängeabschnitt (12, 13) und der Küchenarmatur erstreckt oder dass sich der zweite Hängeabschnitt auf der dem ersten Hängeabschnitt (12, 13) abgewandten Seite der Küchenarmatur erstreckt.

10. Spültuch-oder Schwamm-Trockeneinrichtung nach Anspruch 7 bzw. 8 oder 9, **dadurch gekennzeichnet, dass**
wenigstens einer der Hängeabschnitte (12, 13) eine rutschhemmend Auflagefläche (14) für das Spültuch hat.

11. Spültuch- oder Schwamm-Trockeneinrichtung nach einem der Ansprüche 1 bis 10, **dadurch gekennzeichnet, dass**
ein Korb (60) der mit einem Clip an der Spültuch- oder Schwamm-Trockeneinrichtung nach einem der vorstehenden Ansprüche befestigt ist, einen umlaufenden Rahmen (61) aufweist, an den wenigstens eine U-förmige Strebe (62) mit ihren freien Enden angesetzt ist und der Mittelschenkel (63) der U-förmige Strebe den Boden des Korbs (60) bildet

12. Küchenarmatur und eine Spültuch- oder Schwamm-Trockeneinrichtung nach einem der Ansprüche 1 bis 11, wobei die Aufnahme (20) in die Küchenarmatur integriert ist.

## Claims

1. Dishcloth or sponge drying device with at least one drying rod (10) for hanging a dish cloth and with a receptacle (20) for fixing the drying rod on a swiveling outlet (40) of a kitchen faucet
**characterized in that**
- the drying rod (10) is supported pivotally around the longitudinal axis with a first section (11) or a first end, in a recess of the receptacle (20) being complementary thereto, and thereby forms a pivot joint,
- the longitudinal axis of the first section (11) extends at least approximately horizontally,
- a second section (12) adjoins the first section (11), which second section (12) is bent relative to the first section (11), such that the second section (12) is pivoted in a vertical plane upon rotation of the first portion (11), and
- a third section bent relative to the second section adjoins to the second section.

2. Dishcloth or sponge drying device according to claim 1,
**characterized in that**
the drying rod (10) is mounted to the receptacle (20), the rod being pivotable at least in a vertical plane.

3. Dishcloth or sponge drying device according to claim 2,
**characterized in that**
the receptacle (20) has at least one pivot joint, at which free end a first end or a first section (11) of the drying rod (10) is mounted.

4. Dishcloth or sponge drying device according to claim 2 or 3,
**characterized in that**
the pivot joint or the pivotable attachment is self-locking.

5. Dishcloth or sponge drying device according to claim 4,
**characterized in that**
one side of the pivot joint has at least one detent, which interacts with complementary recesses of the other side of the pivot joint, such that upon adjustment of the alignment of the dry rod (10), the at least one detent snaps from one recess into the next one.

6. Dishcloth or sponge drying device according to one of claims 1 to 5,
**characterized in that**
the longitudinal axis of the first section (11) extends approximately orthogonally to the vertical plane defined by the swiveling outlet (40).

7. Dishcloth or sponge drying device according to one of claims 1 to 6,
**characterized in that**
the second and/or the third section (12, 13) are/is aligned preferably at least approximately horizontally, and at least the second and/or the third section (12, 13) is a first hanging section (12, 13) with a support surface (14) for hanging a dishcloth.

8. Dishcloth or sponge drying device according to claim 7,
**characterized in that**
that the first hanging section (12, 13) is connected via an arc with a second hanging section, and the second hanging section extends at least approximately parallel to the first hanging section (12, 13).

9. Dishcloth or sponge drying device according to claim 7,
**characterized in that**
the second hanging section extends between the first hanging section (12, 13) and the kitchen faucet, or that the second hanging section extends on the side of kitchen faucet facing away from the first hanging section (12,13).

10. Dishcloth or sponge drying device according to claim 7 or 8 or 9,
**characterized in that**
at least one of the hanging sections (12, 13) has an anti-slip support surface (14) for the dishcloth.

11. Dishcloth or sponge drying device according to one of claims 1 to 10,
**characterized in that**
a basket (60) being fastened to the dishcloth or sponge drying device according to one of the preceding claims by means of clip, the basket having a circumferential frame (61) at which at least one U-shaped strut (62) is adjoined with its free ends, and the middle leg (63) of the U-shaped strut forms the bottom of the basket (60).

12. Kitchen faucet and a dishcloth or sponge drying device according to one of claims 1 to 11, wherein the receptacle (20) is integrated into the kitchen faucet.

## Revendications

1. Dispositif pour le séchage de torchons ou d'éponges avec au moins une barre de séchage (10) pour l'accrochage d'un torchon et avec un réceptacle (20) pour la fixation de la barre de séchage sur une bec orientable (40) d'un robinet de cuisine, **caractérisé en ce que**
- la barre de séchage (10) est supportée par une première partie (11) ou une première extrémité dans un creux correspondant du réceptacle (20), avec possibilité de rotation autour de l'axe longitudinal de la première partie (11), et forme ainsi une articulation pivotante ;
- l'axe longitudinal de la première partie (11) s'étend au moins approximativement à l'horizontale ;
- la première partie (11) est reliée à une deuxième partie (12) qui forme un angle par rapport à la première partie (11) de telle manière que lors d'une rotation de la première partie (11), la deuxième partie (12) pivote dans un plan vertical, et
- une troisième partie formant un angle par rapport à la deuxième partie fait suite à celle-ci.

2. Dispositif pour le séchage de torchons ou d'éponges selon la revendication 1, **caractérisé en ce que** la barre de séchage (10) est fixée au réceptacle (20) de façon à pouvoir pivoter au moins dans un plan vertical.

3. Dispositif pour le séchage de torchons ou d'éponges selon la revendication 2, **caractérisé en ce que** le réceptacle (20) possède au moins une articulation pivotante à l'extrémité libre de laquelle est fixée une première extrémité ou une première partie (11) de la barre de séchage (10).

4. Dispositif pour le séchage de torchons ou d'éponges selon la revendication 2 ou 3, **caractérisé en ce que** l'articulation pivotante ou la fixation pivotante est autobloquante.

5. Dispositif pour le séchage de torchons ou d'éponges selon la revendication 4, **caractérisé en ce qu'**un côté de l'articulation pivotante présente au moins un ergot d'enclenchement qui coopère avec des creux complémentaires de l'autre côté de l'articulation pivotante, de telle sorte que lors du réglage de l'orientation de la barre de séchage (10), l'au moins un ergot d'enclenchement passe d'un creux dans le creux suivant.

6. Dispositif pour le séchage de torchons ou d'éponges selon l'une des revendications 1 à 5, **caractérisé en ce que** l'axe longitudinal de la première partie (11) est au moins approximativement perpendiculaire au plan vertical défini par le bras pivotant (40).

7. Dispositif pour le séchage de torchons ou d'éponges selon l'une des revendications 1 à 6, **caractérisé en ce que** la deuxième partie et/ou la troisième (12, 13) sont de préférence orientées au moins approximativement à l'horizontale et au moins la deuxième partie et/ou la troisième (12, 13) forment une première partie d'accrochage (12, 13) avec une surface de pose (14) pour l'accrochage d'un torchon.

8. Dispositif pour le séchage de torchons ou d'éponges selon la revendication 7, **caractérisé en ce que** la première partie d'accrochage (12, 13) est reliée par l'intermédiaire d'un arc à une deuxième partie d'accrochage et la deuxième partie d'accrochage est au moins approximativement parallèle à la première partie d'accrochage (12, 13).

9. Dispositif pour le séchage de torchons ou d'éponges selon la revendication 7, **caractérisé en ce que** la deuxième partie d'accrochage s'étend entre la première partie d'accrochage (12, 13) et le robinet de cuisine ou **en ce que** la deuxième partie d'accrochage s'étend sur le côté du robinet de cuisine opposé à la première partie d'accrochage (12, 13).

10. Dispositif pour le séchage de torchons ou d'éponges selon la revendication 7 ou 8 ou 9, **caractérisé en ce qu'**au moins une des premières parties d'accrochage (12, 13) possède une surface de pose (14) antidérapante pour le torchon.

11. Dispositif pour le séchage de torchons ou d'éponges selon l'une des revendications 1 à 10, **caractérisé en ce qu'**un panier (60) fixé par une pince au dispositif pour le séchage de torchons ou d'éponges selon l'une des revendications précédentes possède un cadre (61) qui en fait le tour, sur lequel au moins une entretoise (62) en forme de U est posée par ses extrémités libres et le bras central (63) de l'entretoise en forme de U forme le fond du panier (60).

12. Robinet de cuisine et dispositif pour le séchage de torchons ou d'éponges selon l'une des revendications 1 à 11, dans lesquels le réceptacle (20) est intégré dans le robinet de cuisine.
